Europäisches Patentamt

European Patent Office

Office européen des brevets

(11) Veröffentlichungsnummer: **0 324 314**
**A1**

## EUROPÄISCHE PATENTANMELDUNG

(21) Anmeldenummer: **88810013.8**

(22) Anmeldetag: **14.01.88**

(51) Int. Cl.4: **C02F 3/10 , C02F 3/08**

(43) Veröffentlichungstag der Anmeldung:
**19.07.89 Patentblatt 89/29**

(84) Benannte Vertragsstaaten:
**AT BE DE ES FR GB GR IT NL SE**

(71) Anmelder: **Cannazza-Cantatore, Luigia**
**Via Matteotti 8**
**Bisuschio Varese(IT)**

(72) Erfinder: **Cannazza, Simon N.**
**Baumgartenstrasse 3**
**CH-8953 Dietikon(CH)**

(74) Vertreter: **Blum, Rudolf Emil Ernst et al**
**c/o E. Blum & Co Patentanwälte Vorderberg 11**
**CH-8044 Zürich(CH)**

(54) **Trägerkörper und Reaktor zur biologischen Behandlung von Flüssigkeiten und Verwendung derselben.**

(57) Die Oberfläche eines Trägerkörpers (4) für einen dem biologischen Abbau dienenden Reaktor (1) ist mit Aktivkohlengranulat beschichtet. Die Aktivkohlenoberfläche des auf einer Welle (5) drehbar angeordneten Trägerkörpers, an welchem sich Mikroorganismen, insbesondere anaerobe Bakterien anlagern, erlaubt einen rascheren Abbau von biochemisch verwertbaren Substanzen in Abwässern, womit deren Aufenthaltsdauer im Reaktor herabgesetzt werden kann.

Fig. 1

EP 0 324 314 A1

## Trägerkörper und Reaktor zur biologischen Behandlung von Flüssigkeiten und Verwendung derselben

Die Erfindung betrifft einen Trägerkörper sowie einen Reaktor für den biologischen, insbesondere anaeroben Abbau von Substanzen in Flüssigkeiten.

Trägerkörper für entsprechende Anwendungen sind z.B. aus der europäischen Patentanmeldung Nr. 0 061 813 bekannt. Die im Reaktor beweglichen Trägerkörper bilden dabei einerseits Flächen, an denen sich Mikroorganismen ansetzen, welche den anaeroben Abbau des Schlamms vornehmen und wirken andererseits als Mischer. Durch die Bewegung der Trägerkörper bezüglich des Reaktors bzw. Abwassers wird zudem der biologische und biochemische Austausch gefördert. Um eine möglichst grosse Oberfläche für die anhaftenden Mikroorganismen bei möglichst guter Umströmung zu erzielen, sind entsprechende grossflächige Lamellenstrukturen vorgeschlagen, die in Dreh- bzw. Durchflussrichtung offen sind. Solche Trägerkörper bewähren sich mindestens zur Behandlung der rasch abbaubaren Substanzen. Soll jedoch die Reaktionszeit insbesondere auch im Hinblick auf die langsamer abbaubaren Substanzen, wie z.B. Olivenöl-Abwässer, herabgesetzt werden, so stösst die bisherige Technik an eine Grenze.

Andererseits ist es bekannt, vertikal durchströmte Reaktoren mit losem Aktivkohlematerial als Trägermaterial zu füllen. Bei Abwässern mit hohem Trockensubstanzgehalt von bis zu 10 % erfolgt sehr rasch eine Verstopfung der filterartig wirkenden Füllung.

Es stellt sich erfindungsgemäss die Aufgabe, einen Trägerkörper sowie einen Reaktor so auszugestalten, dass auch langsam abbaubare Substanzen mit hohem Trockensubstanzanteil wirksam und mit kurzen Aufenthaltszeiten behandelt werden können.

Diese Aufgabe wird insbesondere mittels eines Tauchkörpers der eingangs genannten Art erzielt, dessen Oberfläche mindestens teilweise mit Aktivkohle versehen ist. Diese Massnahme führt einerseits zu einer vergrösserten Fläche zur Anlagerung der Mikroorganismen und für den chemischen und biochemischen Austausch und andererseits wird die Schmutzfracht von der Aktivkohlenoberfläche zurückgehalten und den gasbildenden Mikroorganismen zur Verfügung gestellt. Ueberraschenderweise hat sich dabei gezeigt, dass insbesondere bei anaerober Behandlung die Wirksamkeit der Aktivkohle über lange Zeit ohne Regeneration erhalten bleibt. Die Aktivkohle wird vorzugsweise in Form einer Granulatschicht auf die Oberfläche der Trägerkörperstruktur aufgebracht, indem diese Struktur zunächst mit einem Bindemittel versehen und danach mit dem Granulat bestäubt wird.

Solche Trägerkörper werden vorzugsweise in einer Reaktoranordnung eingebaut, bei welcher die Reinigung des Abwassers von rasch abbaubaren Substanzen getrennt ist von der Reinigung hinsichtlich langsamer abbaubaren Stoffen. In diesem Fall ist es vorteilhaft, in der zweiten Stufe einen erfindungsgemässen Trägerkörper anzuordnen, so dass der langsamere Abbau gefördert und die entsprechende Reaktionszeit herabgesetzt werden kann.

Es ist an sich bekannt, solche Behandlungen in mehreren Stufen auszuführen, die sich in ihren chemischen und biologischen Abläufen voneinander unterscheiden. Dazu ist etwa aus der europäischen Patentpublikation 0 061 813 bekannt, die Flüssigkeit nacheinander in verschiedene Reaktoren zu leiten, die je einer der Stufen zugeordnet sind. Die entsprechenden Einrichtungen sind jedoch aufwendig und erlauben keine kontinuierliche Arbeitsweise. Ferner muss je nach Stufe ev. Reaktionswärme von aussen zugeführt werden.

Es stellt sich damit ferner die Aufgabe, einen Reaktor der genannten Art zu schaffen, der diese Nachteile nicht besitzt und eine mehrstufige Arbeitsweise mit optimalem Wirkungsgrad erlaubt.

Erfindungsgemäss wird diese Aufgabe gelöst durch einen im wesentlichen horizontal durchflossenen Behälter, der in mehrere, nebeneinanderliegende, kommunizierende Kammern unterteilt ist, wobei mindestens in einem Teil der Kammern ein Trägerkörper für Mikroorganismen drehbar angeordnet sind.

Mit Vorteil sind die Trägerkörper dabei auf einer gemeinsamen, horizontalen Antriebswelle angeordnet, die sich in Behälterlängsrichtung durch mindestens einen Teil der Kammern hindurch erstreckt. Für sämtliche Stufen ist damit lediglich ein Antrieb nötig. Die Kammerunterteilung ist vorzugsweise durch vertikale Zwischenwände gebildet, die wechselweise oben bzw. unten einen Durchlass zwischen den Kammern bilden, womit zusammen mit den sich drehenden Trägerkörpern eine optimale und den gesamten Durchfluss erfassende Umspülung der Trägerkörper bzw. der darauf fixierten Mikroorganismen erreicht wird. Ferner stellt sich dank der aneinanderliegenden Kammern über den Reaktor eine gleichmässige Reaktionstemperatur ein, so dass eine Wärmezufuhr zu einzelnen Stufen unnötig wird und die Reaktionstemperatur durch die Temperatur der eintretenden Flüssigkeit festlegbar ist.

Nachfolgend wird ein Ausführungsbeispiel der Erfindung anhand der beiliegenden Zeichnungen näher erläutert.

Darin zeigen:

Figur 1 eine Reaktorstufe mit einem erfindungsgemässen Trägerkörper entlang der Rotationsachse geschnitten,

Figur 2 eine Schnittansicht entlang der Linie II-II in Figur 1,

Figur 3 eine mögliche Trägerkörperstruktur in perspektivischer Teilansicht,

Figur 4 eine schematische Schnittdarstellung eines mit Aktivkohle beschichteten Wandteils,

Figur 5 eine weitere, mögliche Trägerkörperstruktur,

Figur 6 eine Aufsicht auf einen Reaktor,

Figur 7 eine Seitenansicht desselben mit abgehobenem Oberteil, und

Figur 8 eine schematische Schnittansicht entlang der Linie III-III in Figur 6.

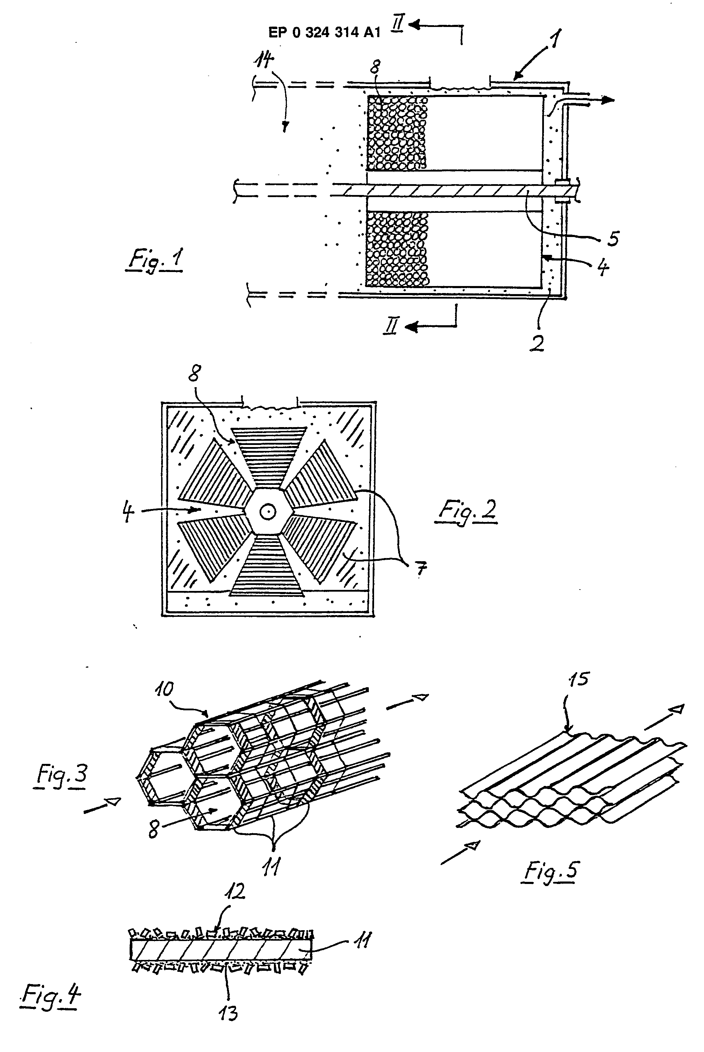

In Figur 1 ist schematisch ein Teil einer Reaktionsanordnung 1 für den biologischen, vorzugsweise anaeroben Abbau von Substanzen in einer Flüssigkeit gezeigt, wobei in einem Reaktor 2 ein Trägerkörper 4 auf einer Welle 5 gelagert ist.

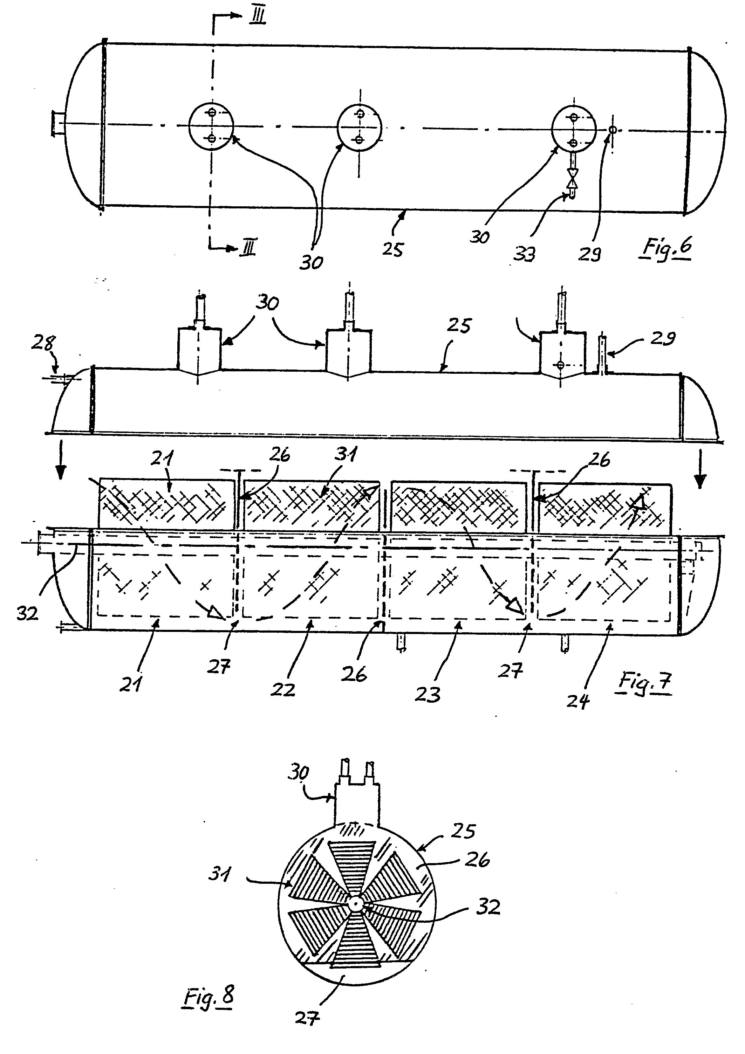

Der Trägerkörper ist, wie aus Figur 1 und Figur 3 ersichtlich, aus einzelnen, sektoriell auf der Welle 5 angeordneten Trägerkörperpaketen 7 aufgebaut, welche je eine Struktur mit im wesentlichen geraden, in der Drehrichtung offenen Kanälen 8 bilden, die von der zu reinigenden Flüssigkeit durchströmt werden und an deren Wände sich die Mikroorganismen anlagern können. Die genannte Struktur soll eine möglichst grosse Oberfläche bilden und zugleich einen ausreichenden Stoffaustausch gewährleisten. Neben lamellenartigen Strukturen, wie etwa in der erwähnten europäischen Patentanmeldung gezeigt, sind insbesondere gitterartige Anordnungen 10 mit einer Vielzahl von Längs- und Querstegen 11 und in Längsrichtung offenen Kanälen 8 verwendbar, die aus Kunststoffmaterial bestehen, und die genannten Anforderungen bei geringem Eigengewicht und Eigenvolumen erfüllen. Auch plattenartig aufgebaute Strukturen 15 mit offenen Kanälen (Fig. 5) sind einsetzbar. Gemäss der Erfindung ist der Trägerkörper an seiner Oberfläche mindestens teilweise mit Aktivkohle versehen. Als Aktivkohlenmaterial kann insbesondere Korn- bzw. Formkohle verwendet werden, das in der Form wasserfester stabiler Granulate im Handel erhältlich ist. Die mittlere Korngrösse kann im Bereich von ca. 2 mm gewählt werden. Die Beschichtung erfolgt beim Ausführungsbeispiel dadurch, dass die Trägerkörperpakete 7 zunächst in ein Bindemittelbad getaucht werden, das die gesamte Oberfläche benetzt. Vor dem Antrocknen des Bindemittels 13 erfolgt die Bestäubung mit Aktivkohlengranulat 12 vorzugsweise in einem Wirbelbett, womit eine gleichmässige Beschichtung gewährleistet ist. Hierbei ist die genannte gitterartige Struktur 10 insofern vorteilhaft, als sie nicht nur in Kanalrichtung sondern auch quer dazu offen ist, so dass das Granulat 12 leicht ins Innere der Struktur gelangen kann. Bei der Beschichtung ist das Granulat 12, wie in Figur 4 schematisch gezeigt, als im wesentlichen einlagige Schicht rückseitig vom Bindemittel gehalten. Seine Vorderseite bleibt frei von Bindemittel, so dass nach aussen die Aktivkohlenstruktur offen liegt.

Die so mit Aktivkohle beschichteten Trägerkörper werden in anaeroben, biologischen Reaktoren an sich bekannter Art eingesetzt, vorzugsweise aber dort, wo es gilt, relativ langsam abbaubare Substanzen aus dem Abwasser zu entfernen. In einer Reaktoranordnung nach Figur 1 wird in den nachfolgend zu erläuternden Vorstufen 14 zunächst der rasch abbaubare Teil des Schlamms durch anaerobe Mikroorganismen in Gas, wie $CO_2$ und Methan, umgewandelt. Die im Abwasser verbleibenden, reativ langsam abbaubaren Stoffe gelangen kontinuierlich in den Reaktor 2. Darin gelingt durch die erläuterten Massnahmen der Abbau dieser Stoffe in reativ kurzer Zeit, so dass das Wasser nach kurzer mittlerer Aufenthaltsdauer im Reaktor diesem gereinigt entnommen werden kann.

In den Figuren 6 bis 8 ist nun ein Reaktor mit ins gesamt vier Reaktionskammern 21 bis 24 dargestellt, die innerhalb eines tankartigen, liegenden Behälters 25 durch Zwischenwände 26 gebildet sind, welche abwechselnd unten bzw. oben einen Durchlass 27 zwischen den Kammern 21 bis 24 freigeben. Die erste Kammer 21 weist einen oben liegenden Einlass 28 und die letzte Kammer einen oben liegenden Auslass 29 auf, so dass die Strömung durch den Reaktor im Mittel etwa gemäss den strichlinierten Pfeilen in Figur 7 verläuft. Damit kann in der ersten und der letzten Kammer 21 und 24 das sich entwickelnde Gas separat in entsprechenden Gasdomen 30 aufgefangen werden, indem bei der genanten Anordnung die erste und die letzte Kammer für den Gasaustritt von den anderen Kammern getrennt sind. Dies ist insbesondere deshalb von Vorteil, weil in der ersten Kammer vorwiegend eine saure Gärung stattfindet und überwiegend (z.B. zwischen 60-80 %) $CO_2$-Gas aufgefangen wird. In der letzten Kammer 24 andererseits findet vorwiegend eine Methangärung statt (z.B. 50-80 % Methangasanteil).

Die erwähnte Abtrennung der ersten Kammer bezüglich des erzeugten Gases gestattet eine Steuerung des Ablaufs, ausgehend von der ersten Stufe durch Bestimmung der Gasanteile und entsprechende Einstellung, z.B. des pH der eintretenden Flüssigkeit. Die beiden mittleren Kammern 22 und 23 besitzen einen gemeinsamen Dom 30, worin Gas mit einem Methananteil von ca. 20-60 % aufgefangen wird.

Innerhalb der Kammern sind die Trägerkörper 31 angeordnet, die auf einer gemeinsamen horizontalen Antriebswelle 32 sitzen, welche mittels eines Motors (nicht dargestellt) in Drehung versetzt wird. Die Trägerkörper bestehen aus mehreren Paketen, die vorzugsweise aus Kunststoffteilen aufgebaut sind und, wie beschrieben, eine gitterartige Struktur mit grosser Oberfläche bilden, wobei darin Kanäle in Drehrichtung verlaufen, welche das Durchströmen der Flüssigkeit bei der Drehung gestatten.

Die so erzeugte spezifische Oberfläche, auf der anaerobe Mikroorganismen fixiert werden, beträgt ca. 150 $m^2/m^3$. Auf den Trägerkörpern 31 werden Populationen von Mikroorganismen differenziert fixiert, d.h. die Populationen unterscheiden sich von Kammer zu Kammer entsprechend des Abbauvorganges. Die Flüssigkeit durchströmt im Betrieb den Reaktor kontinuierlich und durchläuft so hintereinander die einzelnen Stufen im wesentlichen unter Luftabschluss. Das produzierte Gas wird über die Gasdome weggeführt, während feste Rückstände durch Ablässe am Boden des Reaktors entnehmbar sind. Ein Teil der behandelten Flüssigkeit kann zur Verfahrenssteuerung mittels eines Auslasses 33 im oberen Bereich der letzten Kammer 24 rezirkuliert, d.h. der eintretenden Flüssigkeit zugemischt werden.

Um den Abbau von sich relativ langsam abbauenden Substanzen zu fördern, ist insbesondere in der letzten Kammer 24 der Trägerkörper 31 mit Aktivkohle versehen, die den anaeroben Abbau von Substanzen fördert und sich überraschenderweise selbst regeneriert, wie eingangs erwähnt.

Andererseits kann die letzte Kammer auch für den zusätzlichen aeroben Abbau durch Einblasen von Luft in diese Kammer vorgesehen sein, ohne dass die vorangehende anaerobe Behandlung dadurch beeinträchtigt wird.

Obschon die beschriebene Ausführung vier Kammern aufweist, sind entsprechende mehrstufige Systeme bereits ab zwei Kammern realisierbar, wozu in Figur 7 im wesentlichen die Kammern 23 und 24 wegzudenken wären. Das beschriebene 4-stufige System hat dabei den Vorteil, dass der Verfahrensablauf darin feiner regelbar ist.

Der beschriebene Trägerkörper und Reaktor eignet sich insbesondere gut für die anaerobe Behandlung von Olivenöl-Abwasser und andere, schwer abbaubare Abwässer mit einem hohen Trockensubstanzanteil bis zu 10 %.

**Ansprüche**

1. Trägerkörper (4) zur Anordnung in einem Reaktor (2) für den biologischen Abbau von Substanzen in Flüssigkeiten, dadurch gekennzeichnet, dass seine Oberfläche mindestens teilweise mit Aktivkohle (12) versehen ist.

2. Trägerkörper nach Anspruch 1, dadurch gekennzeichnet, dass eine Oberfläche mindestens teilweise mit Aktivkohle (12) beschichtet ist.

3. Trägerkörper nach Anspruch 2, dadurch gekennzeichnet, dass die Aktivkohlenschicht aus Aktivkohlengranulat besteht.

4. Trägerkörper nach Anspruch 2 oder 3, dadurch gekennzeichnet, dass das tragende Material (11) des Trägerkörpers (4) aus Kunststoff besteht, an dessen Oberflächen die Aktivkohle (12) mittels einem Bindemittel (13) gehalten ist.

5. Trägerkörper nach einem der vorangehenden Ansprüche, dadurch gekennzeichnet, dass er eine zentrale Welle (5) zur drehbaren Anordnung im Reaktor (2) und darauf angeordnete Trägerkörperpakete (7) aufweist, die je in Rotationsrichtung verlaufende Kanäle (8) besitzen.

6. Trägerkörper nach Anspruch 5, dadurch gekennzeichnet, dass die Trägerkörperpakete (7) aus einer Vielzahl von gitterartig ausgebildeten, rohrförmigen Kunststoffkörpern (10;15) zusammengesetzt sind.

7. Reaktor für die anaerobe oder noxische Behandlung von Flüssigkeiten, insbesondere Abwässern, mit Trägerkörper nach Anspruch 1, gekennzeichnet durch einen im wesentlichen horizontal durchflossenen Behälter (25), der in mehrere, nebeneinanderliegende, kommunizierende Kammern (21 bis 24) unterteilt ist, wobei mindestens in einem Teil der Kammern ein Trägerkörper (4;31) für Mikroorganis men drehbar angeordnet ist.

8. Reaktor nach Anspruch 7, dadurch gekennzeichnet, dass der Behälter Ein- und Auslässe (28,29) für die Flüssigkeit sowie eine Kammerunterteilung (26) besitzt, derart, dass der Flüssigkeitsstrom jede Kammer (21 bis 24) im wesentlichen diagonal von oben nach unten oder von unten nach oben durchquert.

9. Reaktor nach einem der vorangehenden Ansprüche 7 und 8, dadurch gekennzeichnet, dass die Trägerkörper (31) auf einer gemeinsamen, horizontalen Antriebswelle (32) angeordnet sind, die sich in Behälterlängsrichtung durch mindestens einen Teil der Kammern hindurch erstreckt.

10. Reaktor nach einem der vorangehenden Ansprüche 7 bis 9, dadurch gekennzeichnet, dass die Trägerkörper (31) Kanäle aufweisen, die im wesentlichen in Rotationsrichtung verlaufen und eine spezifische Oberfläche von etwa 150 $m^2/m^3$ bilden.

11. Reaktor nach einem der vorangehenden Ansprüche 7 bis 10, dadurch gekennzeichnet, dass die Kammerunterteilung durch vertikale Zwischenwände (26) gebildet ist, die wechselweise oben bzw. unten einen Durchlass (27) zwischen den Kammern bilden.

12. Reaktor nach Anspruch 11, dadurch gekennzeichnet, dass die letzte Kammer (24) einen untengelegenen Durchlass (27) zur vorangehenden Kammer und einen obengelegenen Auslass (29,12) besitzt.

13. Verwendung des Reaktors nach einem der Ansprüche 7 bis 12 für den biologischen Abbau von Olivenöl-Abwasser.

*Fig.1*

*Fig.2*

*Fig.3*

*Fig.4*

*Fig.5*

Fig. 6

Fig. 7

Fig. 8

| | Europäisches Patentamt | EUROPÄISCHER RECHERCHENBERICHT | Nummer der Anmeldung |
|---|---|---|---|
| | | | EP 88 81 0013 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 725 510 (ICI)<br>* Seite 1, Ansprüche 1,2; Seite 3, Absatz 4 - Seite 6, Absatz 1; Seite 6, Beispiel 1 *<br>--- | 1-4,6 | C 02 F 3/10<br>C 02 F 3/08 |
| X | US-A-4 563 281 (SYRACUSE UNIVERSITY)<br>* Spalte 2, Zeile 50 - Spalte 3, Zeile 46 *<br>--- | 7,9 | |
| X | US-A-3 704 783 (AUTOTROL)<br>* Spalte 2, Zeile 67 - Spalte 3, Zeile 14; Spalte 4, Zeilen 13-27; Figuren 1,2 *<br>--- | 7,8,11, 12 | |
| A | FR-A-2 261 231 (PARCA-NORRAHAMMAR)<br>* Seite 6, Anspruch 1; Figuren 2,3 *<br>----- | 7,8,11, 12 | |

| RECHERCHIERTE SACHGEBIETE (Int. Cl.4) |
|---|
| C 02 F |

Der vorliegende Recherchenbericht wurde für alle Patentansprüche erstellt

| Recherchenort | Abschlußdatum der Recherche | Prüfer |
|---|---|---|
| DEN HAAG | 25-08-1988 | TEPLY J. |